# EUROPEAN PATENT SPECIFICATION

(11) **EP 1 092 614 B1**
(45) Date of publication and mention of the grant of the patent: **27.04.2005**
(21) Application number: 00305602.5
(22) Date of filing: 03.07.2000
(51) Int. Cl.: B62H 3/00

(54) **Parking apparatus**
Parkvorrichtung
Appareil de stationnement

(30) Priority: 02.07.1999 GB 9915382
(43) Date of publication of application: 18.04.2001
(73) Proprietor: VM Fabrications Limited, Carlton, Barnsley S71 3HU (GB)
(72) Inventor: Hughes, Derek, Holmfirth, West Yorkshire HD7 1LR (GB)
(74) Representative: McDonough, Jonathan

(56) References cited:
- FR-A- 997 486
- GB-A- 558 041
- GB-A- 2 009 068
- US-A- 3 942 646
- US-A- 4 050 583
- US-A- 5 267 657
- US-A- 5 702 007

## Description

The present invention relates to apparatus for the secure parking of two wheeled vehicles, particularly but not exclusively, motorcycles.

There is presently a shortage of secure parking for motorcycles and as in the United Kingdom it has recently become an offence to attach a motorcycle to any local authority-owned structure such as a lamp post, fence or the like, it would be advantageous to all concerned to provide suitable apparatus for the secure and organised parking of motorcycles.

Existing designs of apparatus for this purpose are complex and difficult to use and in some cases are large structures which if placed on a pavement or other public right of way would present a tripping hazard to pedestrians, particularly those who are partially sighted.

It is therefore one of the aims of the present invention to provide parking apparatus which overcomes the above mentioned disadvantages.

US-A0-5 702 007 discloses a rack especially adapted for use with bicycles. The rack comprises upper and lower intersecting leg portions each including side walls for engaging one of the wheels of the vehicle over a substantial portion of its perimeter. In one embodiment the rack includes a tubular member extending transversely through the upper leg for receiving cables for locking the cycle to the rack.

According to the present invention there is provided an apparatus for parking a two wheeled vehicle, the apparatus comprising a base unit having at least one arcuate groove therein for engaging one of the wheels of the vehicle over a substantial portion of its perimeter, and a releasable retaining means for retaining the wheel in said groove;
characterised in that
the apparatus further comprises a holding gimbal pivotally mounted within the groove at its lowermost edge adapted to hold the wheel in place and steady the vehicle.

Preferable, the base unit is of a size and weight sufficient to ensure that the apparatus could not be lifted without mechanical assistance. The base unit is conveniently manufactured from the reinforced pre-cast concrete and the moulding is preferably shaped such as to have smooth contours which are both aesthetically pleasing and safe for pedestrians and users of the apparatus alike.

The releasable retaining means preferably comprise a clamp of hardened steel or similar material, which may be operated by a lock. Conveniently, the clamp is located towards the upper region of the base, and spans the groove and, when locked, passes through the wheel retained in the groove.

Although in the preferred embodiment the base unit has just one groove in it, the invention also encompasses more than one groove, for example "double" and "triplet" base units with two or three grooves, respectively.

Preferably, the base unit is adapted at its upper end to receive a parking meter or similar device and where such a device is attached the retaining means may be operatively linked to the device such that the retaining means may serve as a punitive clamping mechanism in the event that the vehicle is not removed when the purchased parking time expires. Alternatively or additionally the retaining means may have additional fixing points for another lock to be fitted (by the owner of the apparatus) for the purposes of punitive clamping.

Preferably the base unit includes means by which a number of such base units may be joined together.

The "footprint" of the base unit is preferably of standard shape and size so as to allow the unit to be incorporated into standing amenity paving/flooring and cobble effect flooring. If desired, the units may be installed side by side in herringbone fashion in designated areas within towns, cities and other public areas.

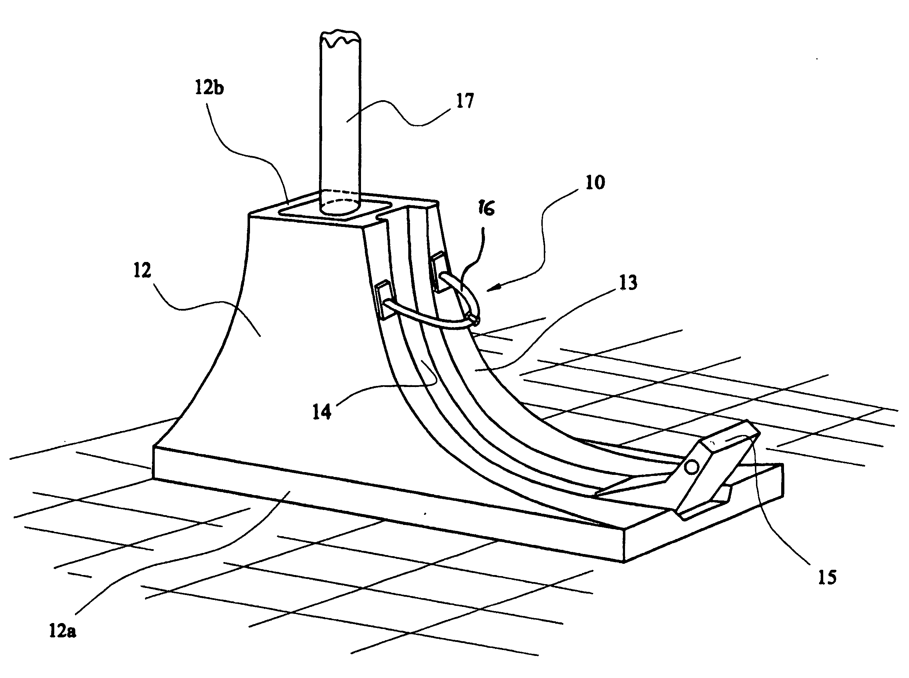

An embodiment of the present invention will now be described, by way of example only, with reference to the accompanying Figure 1, illustrating the apparatus of the invention in perspective view.

According to the drawing, apparatus 10 for parking a two-wheeled vehicle such as a motorcycle comprises a base unit 12 of pre-cast reinforced concrete having a lower surface 12a which is generally rectangular and an upper surface 12b which is generally square and of small area than the lower surface 12a. The sides of the unit are cast so as to curve concavely down from the upper to the lower surface, but the "front" side 13, that is to say the side of the unit which faces the user of the apparatus, as well as being concavely curved is extended and has an arcuate groove 14 therein which is just wide and deep enough to receive and engage with the front wheel of the motorcycle. The groove extends from the lower to the upper surface, such that the wheel is engaged in the groove over a substantial portion (for example a quarter or more) of the wheel perimeter such that the wheel, and hence the entire motorcycle is securely held in the upright position. This stability is further enhanced by a rear holding gimbal 15 mounted in the groove at its lowermost edge.

Close to the upper end of the groove there is provided releasable retaining means in the form of a hardened steel clamp 16 which may include additional fixing points for further locking means. The clamp 16 is passed through the wheel within groove 14 and locked by means of either a user-owned lock such as a standard padlock, or lock specifically provided for the apparatus and owned by the owner of the apparatus to be sold or rented to the user.

It can be seen from the drawing that the base unit, being made of concrete, would be sufficiently heavy to provide security for a motorcycle parked within it even when the unit is free standing, but for additional security the unit may be bolted to or permanently installed within the paved or concreted in the ground.

In the preferred embodiment the base unit may be provided with means 17 for fixing a parking meter or other suitable timing/payment device to the base unit, and in this embodiment the clamp 16 may be operatively linked to the parking meter or similar device such that the clamp 16 could only be unlocked upon payment and the clamp would only remain openable during the purchased parking time. Should the user fail to return and remove the motorcycle within the purchased time, an official would have to be summoned to open the clamp and the user would then have to pay a fine. Alternatively, the clamp 16 may include means whereby a separate punitive clamping device may be attached by an official.

A number of units 12, preferably each with a parking meter attached, may be installed side by side or may be joined together by suitable coupling means (not shown) provided on each base unit. This is made possible by virtue of the fact that the motorcycle is held securely in the base unit without the use of the stand, thus reducing the effective width of the motorcycle when parked in the apparatus compared with conventional parking using the stand.

Thus, it can be seen that the invention provides a number of advantages. The motorcycle user is provided with a secure parking place for his vehicle, whilst at the same time the owner of the apparatus (eg the local authority) retains full control of motorcycle parking and may obtain an income either from the metering of the device, or unclamping fees, or both (alternatively the local authority might rent the units, on a quarterly or annual basis, to individuals or companies in the case of regular use outside a place of work).

## Claims

1. An apparatus (10) for parking a two wheeled vehicle, the apparatus comprising a base unit (12) having at least one arcuate groove (14) therein for engaging one of the wheels of the vehicle over a substantial portion of its perimeter, and
a releasable retaining means (16) for retaining the wheel in said groove;
**characterised in that**
the apparatus further comprises a holding gimbal (15) pivotally mounted within the groove (14) at its iowermost edge adapted to hold the wheel in place and steady the vehicle.

2. An apparatus as claimed in claim 1, wherein the base unit (12) is of a size and weight to ensure that the apparatus (10) could not be lifted without mechanical assistance.

3. An apparatus as claimed in either of claims 1 or 2, wherein the base unit (12) is manufactured from reinforced pre-cast concrete.

4. An apparatus as claimed in any one of claims i to 3,wherein the base unit (12) has smooth contours.

5. An apparatus as claimed in any one of claims 1 to 4, wherein the retaining means (16) comprises a clamp, preferably which may be operated by a lock.

6. An apparatus as claimed in claim 5, wherein the clamp is located towards the upper region of the base and spans the groove (14) and, when locked, passes through the wheel retained in the groove.

7. An apparatus as claimed in any one of claims 1 to 6, wherein the base unit (12) is adapted to receive a parking meter, the parking meter being operatively linked to the base unit (12) such that the retaining means (16) may serve as a punitive clamping mechanism in the event that the vehicle is not removed when the purchased parking time expires.

8. An apparatus as claimed in any one of claims 1 to 7, wherein the base unit (12) includes means by which a number of such units may be joined together.

## Patentansprüche

1. Vorrichtung (10) zum Parken eines zweirädrigen Fahrzeugs, wobei die Vorrichtung eine Basiseinheit (12) mit wenigstens einer bogenförmigen Nut (14) darin zum Greifen eines der Räder des Fahrzeugs Ober einen wesentlichen Tell seines Durchmessers und eine lösbare Halteeinrichtung (16) zum Halten des Rades in der Nut aufweist,
**dadurch gekennzeichnet,**
**dass** die Vorrichtung ferner einen Kardanhaltebügel (15) aufweist, der in der Nut (14) an ihrer untersten Kante drehbar befestigt ist und zum ortsfesten Halten des Rades und Stabilisieren des Fahrzeugs ausgebildet ist.

2. Vorrichtung nach Anspruch 1, bei weicher die Basiseinheit (12) von einer Größe und einem Gewicht ist, um zu gewährleisten, dass die Vorrichtung (10) nicht ohne mechanische Hilfe angehoben werden kann.

3. Vorrichtung nach Anspruch 1 oder 2, bei weicher die Basiseinheit (12) aus einem verstärkten Fertigbeton gefertigt ist.

4. Vorrichtung nach einem der Ansprüche 1 bis 3, bei weicher die Basiseinheit (12) welche Konturen aufweist.

5. Vorrichtung nach einem der Ansprüche 1 bis 4, bei welcher die Halteeinrichtung (16) eine Klammer aufweist, die bevorzugt durch ein Schloss betätigt werden kann.

6. Vorrichtung nach Anspruch 5, bei welcher die Klammer zu dem oberen Bereich der Basis positioniert ist und die Nut (14) überspannt und im verriegelten Zustand durch das in der Nut gehaltene Rad läuft.

7. Vorrichtung nach einem der Ansprüche 1 bis 6, bei weicher die Basiseinheit (12) zum Aufnehmen einer Parkuhr ausgebildet ist, wobei die Parkuhr mit der Basiseinheit (12) derart wirkverbunden ist, dass die Halteeinrichtung (16) als ein Strafklemmmechanismus für den Fall dient, dass das Fahrzeug nicht entfernt wird, wenn die bezahlte Parkzeit abläuft.

8. Vorrichtung nach einem der Ansprüche 1 bis 7, bei weicher die Basiseinheit (12) eine Einrichtung enthält, durch welche eine Anzahl solcher Einhelten miteinander verbunden werden kann.

## Revendications

1. Dispositif (10) destiné au stationnement d'un véhicule à deux roues, le dispositif comprenant une unité formant base (12) dans laquelle est formée au moins une rainure arquée (14) pour l'introduction de l'une des roues du véhicule, sur une grande partie de son périmètre, et
un moyen de retenue (16) libérable destiné à retenir la roue dans la rainure ;
**caractérisé en ce que**
le dispositif comprend, en outre, un cardan de maintien (15) monté pivotant à l'intérieur de la rainure (14), au niveau de son bord le plus bas, pour maintenir la roue en place et stabiliser le véhicule.

2. Dispositif selon la revendication 1, dans lequel l'unité formant base (12) présente des dimensions et un poids garantissant que le dispositif (10) ne pourrait pas être soulevé sans assistance mécanique.

3. Dispositif selon l'une des revendications 1 ou 2, dans lequel l'unité formant base (12) est fabriquée en béton renforcé prémoulé.

4. Dispositif selon l'une quelconque des revendications 1 à 3, dans lequel l'unité formant base (12) présente des contours arrondis.

5. Dispositif selon l'une quelconque des revendications 1 à 4, dans lequel les moyens de retenue (16) comprennent un collier de fixation, pouvant de préférence être actionné par un antivol.

6. Dispositif selon la revendication 5, dans lequel l'antivol est situé vers la région supérieure de la base et enjambe la rainure (14) et, lorsqu'il est verrouillé, passe à travers la roue retenue dans la rainure.

7. Dispositif selon l'une quelconque des revendications 1 à 6, dans lequel l'unité formant base (12) est susceptible de recevoir un parcmètre, le parcmètre étant fonctionnellement relié à l'unité formant base (12) de telle sorte que les moyens de retenue (16) puissent servir de mécanisme de blocage punitif au cas où le véhicule n'est pas retiré lorsqu'expire la durée de stationnement achetée.

8. Dispositif selon l'une quelconque des revendications 1 à 7, dans lequel l'unité formant base (12) comprend des moyens grâce auxquels un certain nombre d'unités de ce type peuvent être assemblées.
